# EUROPEAN PATENT APPLICATION

(11) **EP 1 816 847 A2**
(43) Date of publication of application: **08.08.2007**
(21) Application number: 07101394.0
(22) Date of filing: 30.01.2007
(51) Int. Cl.: H04N 1/047

(54) **Scanning apparatus, driving method therefor, and image forming apparatus having the same**

(30) Priority: 03.02.2006 KR 20060010813
(71) Applicant: SAMSUNG ELECTRONICS CO., LTD., Suwon-si, Gyeonggi-do (KR)
(72) Inventor: Bae, Sea-chul, Yeongtong-gu, Gyeonggi-do, Suwon-si (KR)
(74) Representative: Waddington, Richard

(57) **Abstract**

A scanning apparatus includes a stage glass (20) on which a document is loaded, a scanning head (30) which reciprocates between a home position of the stage glass (20) and a finish position opposite to the home position to read the document and generate image data, a position detection part (21) disposed in or on the stage glass (20) along a moving direction of the scanning head (30), a head position sensing part (35) disposed in the scanning head (30) which senses the position detection part (21) to sense the position of the scanning head (30) when a scanning signal is inputted, and a controlling part (70) to control the scanning head (30) so that the scanning head (30) moves to the home position at a faster speed than a predetermined reference speed if the scanning head (30) is distanced farther from the home position than a predetermined distance. Thus, the scanning apparatus, a driving method therefor and an image forming apparatus having the same control a speed with which a scanning head (30) moves to a home position according to the position of the scanning head (30).

## Description

Aspects of the present invention relate to a scanning apparatus, a driving method therefor, and an image forming apparatus having the same, and more particularly, to a scanning apparatus, a driving method therefor and an image forming apparatus having the same to reduce an initial moving time of a scanning head.

Generally, a scanning apparatus scans light to a document and detects a reflected light therefrom to read an image or images of the document. The scanning apparatus has been widely used to obtain image information about a document in a simple fashion. The scanning apparatus may take many different forms, such as a scanner, a facsimile, a copier, a multifunction apparatus, etc.

Generally, the scanning apparatus includes a light source module to scan light to a document, and a converter to detect light reflected from the document and to output an electric signal. Pluralities of reflecting mirrors and lenses are disposed in a predetermined progress path of light between the light source module and the converter. Light scanned by the light source module is reflected according to an image or images of the document. The light then progresses along the progress path through the mirrors and the lenses to be detected by the converter. The converter detects the reflected light and generates an image signal corresponding to the image or images of the document. A CIS (contact image sensor) or a CCD (charge coupled device) is conventionally used as the converter.

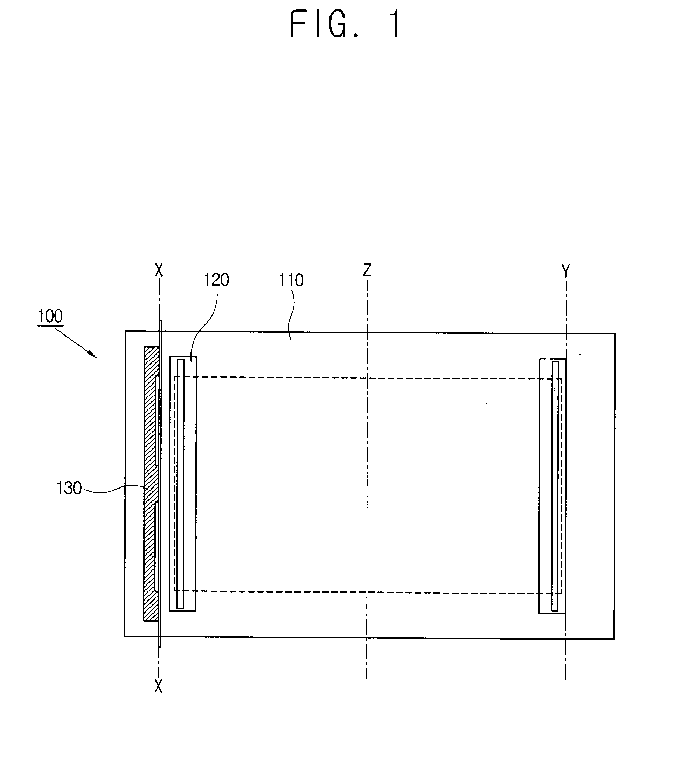

FIG. 1 is a plane view schematically illustrating a conventional scanning apparatus. As shown in FIG. 1, a scanning apparatus 100 includes a stage glass 110 on which a document is placed , and a scanning head 120 which reciprocates beneath the stage glass 110 to read an image or images of the document. The scanning head 120 includes a light source module (not shown) to scan light to the document, and a converter (not shown) to detect a reflected light from the document and to output an image signal.

If a document is put on the stage glass 110 and a scanning signal is inputted, the scanning head 120 moves to a home position X of the stage glass 110 to scan a white bar 130 which serves as a reference to generate an image signal. Then, the scanning head 120 reciprocates between the home position X and a finish position Y opposite to the home position X to read an image or images of the document.

However, in the conventional scanning apparatus 100, if a scanning signal is inputted, the scanning head 120 moves to the home position X at a regular speed, irrespective of the position where the scanning head 120 was originally located. For example, even if the scanning head 120 is positioned at a position Z, which is distant from the home position X of the stage glass 110, the scanning head 120 moves at the same speed as when the scanning head 120 is positioned closer or adjacent to the home position X. Thus, in situations where the scanning head 120 is located far away, it takes a long time for the scanning head 120 to reach the home position X.

Accordingly, an initial moving time of the scanning head is increased, and a total time required to scan a document is thus increased.

The present invention to provides a scanning apparatus, a driving method therefor and an image forming apparatus having the same to control a speed with which a scanning head moves to a home position according to the position of the scanning head.

Additional aspects and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

According to an aspect of the present invention there is provided a scanning apparatus comprising a stage glass on which a document is loadable, a scanning head which is operable to reciprocate between a home position of the stage glass and a finish position opposite to the home position to scan the document and generate image data, a position detection part disposed in or on the stage glass along a moving direction of the scanning head, a head position sensing part which is operable to sense the position detection part to sense a position of the scanning head when a scanning signal is inputted, and a controlling part to control the scanning head so that the scanning head moves to the home position at a faster speed than a predetermined reference speed if the scanning head is distanced farther from the home position than a predetermined distance.

Preferably, the position detection part comprises a position detection label including at least one of a letter and a number.

Preferably, the stage glass comprises an actual reading area on which the document is loadable and through which an image of the document may be scanned, and a valid reading area, located in a perimeter of the actual reading area, which corresponds to opposite sides of the scanning head.

Preferably, the position detection part is located in the valid reading area.

Preferably, the position detection label comprises a plurality of labels located in the valid reading area and spaced at uniform intervals from each other.

Preferably, the head position sensing part is operable to move a predetermined distance toward the finish position when the scanning signal is inputted, and to sense the position of the scanning head through the position detection label positioned to correspond to the moved scanning head.

Preferably, the head position sensing part is located at the opposite sides of the scanning head.

Preferably, the head position sensing part comprises a distance calculating part to compare a sensed position of the position detection label with the home position to calculate a distance therebetween.

Preferably, the scanning apparatus further comprises a driving part to move the scanning head between the home position and the finish position, wherein the controlling part is operable to control the driving part to control a moving speed of the scanning head.

Preferably, the controlling part comprises a distance determining part to determine whether the scanning head is distanced farther from the home position than the predetermined distance, and to control the moving speed of the scanning head to be proportional to a distance between the scanning head and the home position.

Preferably, the driving part comprises a motor, and the controlling part is operable to control a driving speed of the motor to control the moving speed of the scanning head.

Preferably, the head position sensing part is operable to sense the position detection part by using an image scanning process.

According to another aspect of the present invention there is provided a driving method for a scanning apparatus comprising a stage glass on which a document is loaded, and a scanning head, moving a scanning head, which reciprocates between a home position and a finish position opposite to the home position to scan a document and generate image data, toward the finish position by a predetermined distance when a scanning signal is inputted, sensing the position of the scanning head by sensing a position detection part located in or on a stage glass on which the document is loaded, and moving the scanning head to the home position at a faster speed than a predetermined reference speed if the scanning head is distanced farther from the home position than a predetermined distance.

Preferably, the driving method for a scanning apparatus comprises moving the scanning head to the home position at the predetermined reference speed if the scanning head is distanced within the predetermined distance from the home position.

Preferably, the sensing of the position detection part comprises using an image scanning process.

According to another aspect of the present invention there is provided an image forming apparatus comprising a stage glass on which a document is loadable, a scanning head which is operable to reciprocate between a home position of the stage glass and a finish position opposite to the home position to scan the document and generate image data, a position detection part disposed in or on the stage glass along a moving direction of the scanning head, a head position sensing part which is operable to sense the position detection part to sense a position of the scanning head when a scanning signal is inputted, and a controlling part to control the scanning head so that the scanning head moves to the home position at a faster speed than a predetermined reference speed if the scanning head is distanced farther from the home position than a predetermined distance.

Preferably, the head position sensing part is operable to sense the position detection part using an image scanning process.

According to another aspect of the present invention there is provided an image forming apparatus comprising a stage glass on which a document is loadable and a scanning head which is operable to move between a home position of the stage glass and a finish position opposite to the home position to scan the document and generate image data, wherein the scanning head is operable to move to the home position according to a position of the scanning head relative to the home position.

Preferably, a moving speed is adjusted to move the scanning head back to the home position at a faster speed than a reference speed as a distance between the scanning head and the home position increases.

Preferably, a moving speed is adjusted to move the scanning head back to the home position at a faster speed than a reference speed if the scanning head is located farther from the home position than a predetermined distance.

Preferably, a moving speed is adjusted to move the scanning head back to the home position at one of a series of gradually increasing speeds which are faster than a reference speed if the scanning head is located farther from the home position than one of a series of gradually larger predetermined distances corresponding to the series of gradually increasing speeds.

Preferably, a moving speed is adjusted to move the scanning head back to the home position at a first speed and then decelerate the first speed as the scanning head approaches the home position.

Preferably, the image forming apparatus further comprises an actual reading area on which the document is loadable and through which an image of the document is readable and a valid reading area located at a perimeter of the actual reading area.

Preferably, the image forming apparatus further comprises a position detection part located on the valid reading area, comprising a position detection label including at least one of a letter and a number.

Preferably, the position detection label comprises a plurality of letters and/or numbers arranged spaced at uniform intervals from each other.

Preferably, the scanning head further comprises a head position sensing part which is operable to sense the position detection label to sense the distance between the scanning head and the home position, and a controlling part to control the moving speed based on the sensed distance.

Preferably, the head position sensing part senses the position detection label using an image scanning process.

According to another aspect of the present invention there is provided a driving method for an image forming apparatus comprising moving a scanning head, which reciprocates between a home position and a finish position opposite to the home position to scan a document and generate image data, toward the finish position by a predetermined distance when a scanning signal is inputted, sensing a position of the scanning head by sensing a position detection part located in or on a stage glass on which a document is loaded, and moving the scanning head back to the home position at a speed according to the sensed position of the scanning head relative to the home position.

Preferably, the moving of the scanning head back to the home position comprises moving the scanning head at a faster speed than a predetermined reference speed as a distance between the scanning head and the home position increases.

Preferably, the moving of the scanning head back to the home position comprises moving the scanning head at a faster speed than a predetermined reference speed if the scanning head is located farther from the home position than a predetermined distance.

Preferably, the moving of the scanning head back to the home position comprises moving the scanning head at one of a series of gradually increasing speeds which are faster than a reference speed if the scanning head is located farther from the home position than one of a series of gradually larger predetermined distances corresponding to the series of gradually increasing speeds.

Preferably, the moving of the scanning head back to the home position comprises moving the scanning head at a first speed and then decelerating the first speed as the scanning head approaches the home position.

For a better understanding of the invention, and to show how embodiments of the same may be carried into effect, reference will now be made, by way of example, to the accompanying diagrammatic drawings in which:
FIG. 1 is a plane view schematically illustrating a conventional scanning apparatus;
FIG. 2 is a sectional view schematically illustrating a scanning apparatus according to an embodiment of the present invention;
FIG. 3 is a block diagram of the scanning apparatus shown in FIG. 2;
FIG. 4 is a plane view schematically illustrating a stage glass of the scanning apparatus shown in FIG. 2;
FIGs. 5A, 5B, 5C and 5D illustrate examples of position detection labels of the scanning apparatus shown in FIG. 2; and
FIG. 6 is a flowchart illustrating an operation of the scanning apparatus shown in FIG. 2.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

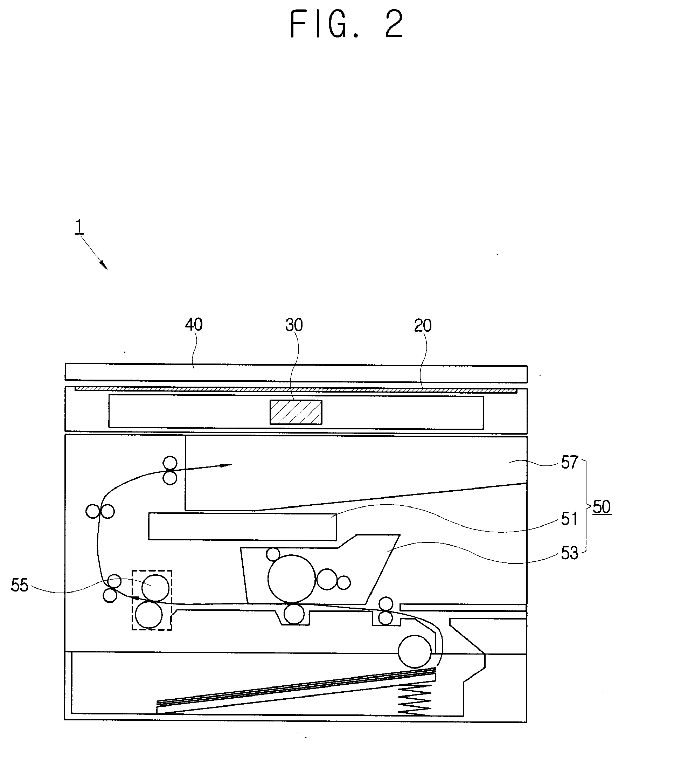

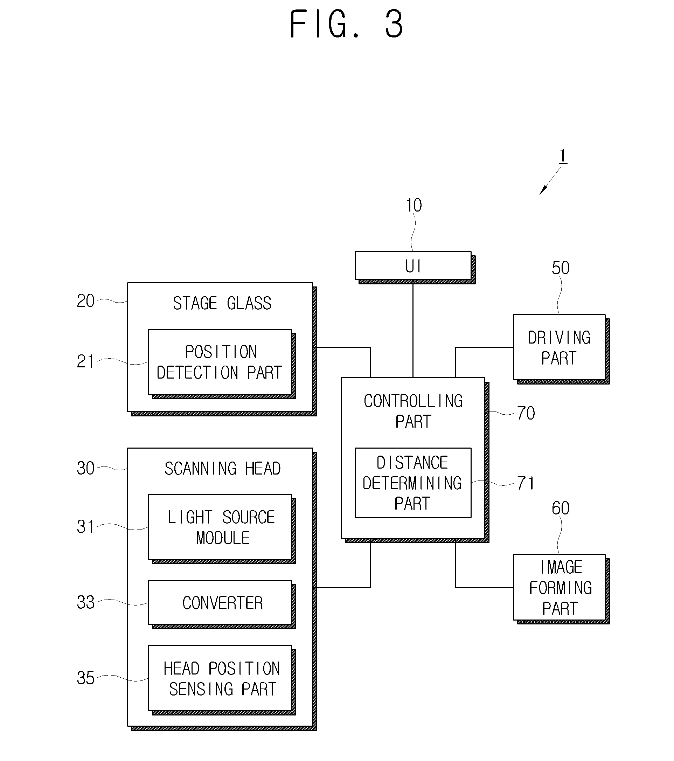

As shown in FIGs. 2 and 3, a scanning apparatus 1 according to an embodiment of the present invention includes a UI (user interface) 10 to input a signal, a stage glass 20 loaded with a document thereon and including a position detection part 21, a scanning head 30 which can sense the position thereof through the position detection part 21 and which reads an image or images of the document loaded on the stage glass 20 to generate image data, a driving part 50 to drive the scanning head 30, an image forming part 60 to visualize the generated image data on paper, and a controlling part 70 to control the driving part 50 based on the position of the scanning head 30 sensed by a head position sensing part 35.

If a user inputs an input signal to the UI 10, the UI 10 displays an operation state of the scanning apparatus 1. The UI 10 may be disposed in an outer side of the scanning apparatus 1, and may include a plurality of input panels to input an input signal and an LCD panel to display the operation state of the scanning apparatus 1. It is understood that the UI 10 may take many different forms, such as a touchpad, a keyboard, etc., and is not limited to being disposed in an outer side of the scanning apparatus 1.

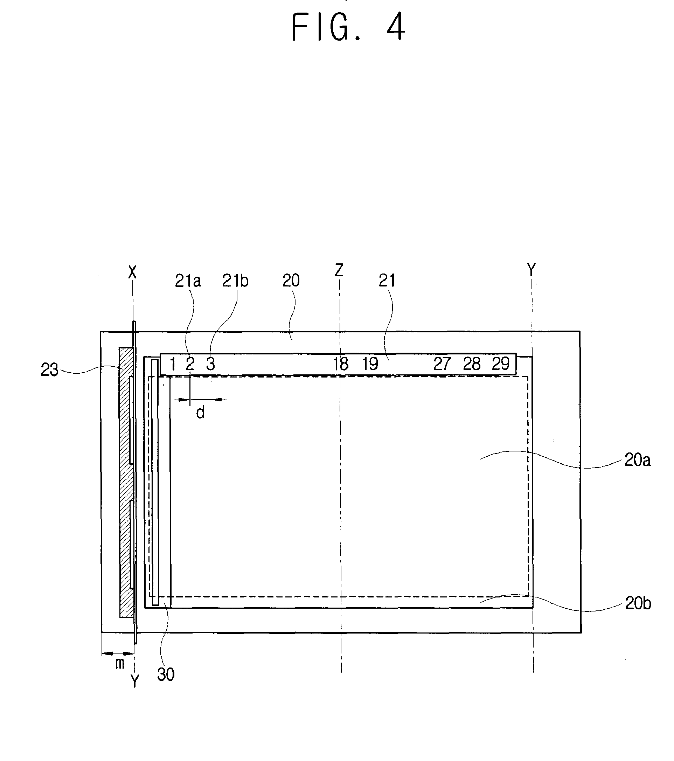

The stage glass 20 is disposed in an upper side of the scanning apparatus 1, and a document to be read is loaded thereon. Referring to FIG. 4, the stage glass 20 includes an actual reading area 20a through which the document is read by the scanning head 30, and a valid reading area 20b surrounding the actual reading area 20a. The position detection part 21 may be disposed in or on the valid reading area 20b of the stage glass 20 to sense the position of the scanning head 30. However, it is understood that the position detection part 21 is not limited to being disposed in or on the valid reading area 20b.

The position detection part 21 includes at least one position detection label. Preferably, the position detection part 21 includes a plurality of position detection labels, such as position detection labels 21a, 21b and other labels (FIG. 4), arranged at predetermined intervals along a moving direction of the scanning head 30. Hereinafter, references to the position detection labels 21a and 21b may be referring to a plurality of position detection labels including more than just the position detection labels 21a and 21b.

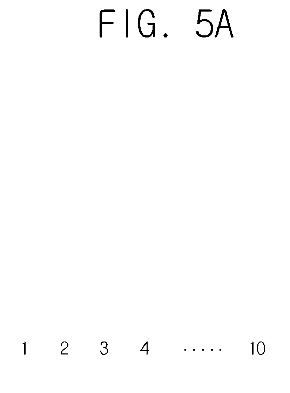

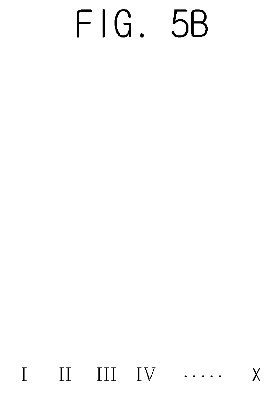

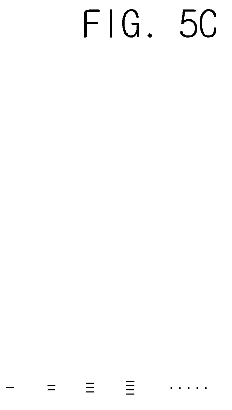

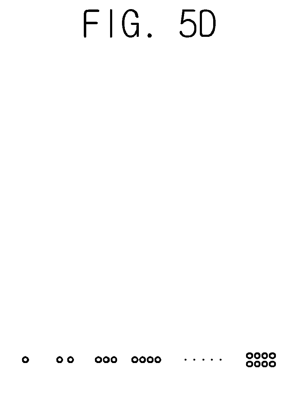

The position detection labels 21a and 21b may be an image, such as a letter, a sign, a number, or a combination thereof, and may also be various other symbols which are capable of being identified by an image process of the scanning head 30. Referring to FIGs. 5A to 5D, the position detection labels 21a and 21b may be formed in various types to indicate numbers. Alternatively, the position detection labels 21a and 21b may be formed as other types. It is preferable for the position detection labels 21a and 21b to be arranged at a uniform interval d in the valid reading area 20b.

A white bar is provided in an end part of the stage glass 20 to serve as a reference when the scanning head 30 reads an image of the document. The scanning head 30 moves from a home position X in which the white bar 30 is positioned to a finish position Y opposite to the home position X to read an image of the document. A cover member 40 is provided in a side of the stage glass 20 to cover the stage glass 20 during the scanning process.

When a scanning signal is inputted, the scanning head 30 reciprocates beneath the stage glass 20 based on a control signal of the controlling part 70, and reads an image or images of the document to generate image data. The scanning head 30 includes a light source module 31 to scan light to the document, a converter 33 to receive light reflected from the document to generate an image signal corresponding to the reflected light, and the head position sensing part 35 to sense the position of the scanning head 30 by sensing the position detection part 21 and to transmit position information to the controlling part 70.

The light source module 31 includes a lighting unit (not shown) to scan light to the document loaded on the stage glass 20. The lighting unit is turned on and off based on a control signal of the controlling part 70, and outputs light at a predetermined intensity so that the scanning head 30 may interpret image information by using light reflected from an image or images of the document.

The converter 33 converts light received through the light source module 31 to an electric analog image signal proportional to the intensity of the received light. The converter 33 may be a CIS (contact image sensor), a CCD (charge coupled device) or the like. However, it is understood that the converter 33 is not limited to being a CIS or a CCD. An ADC (analog to digital converter) converts the electric analog image signal to digital image data.

The head position sensing part 35 is preferably, but not necessarily, disposed in opposite sides of the scanning head 30 and senses the position of the scanning head 30 by sensing the position detection labels 21a and 21b provided in the valid reading area 20b of the stage glass 20 to output a position signal to the controlling part 70. The scanning head 30 may be positioned in any position between the home position X and the finish position Y when a scanning signal is inputted. The head position sensing part 35 senses the position of the scanning head 30 through the position detection labels 21a and 21b.

The head position sensing part 35 senses an image of the position detection labels 21a and 21b of the stage glass 20 by using the same process as the image process used by the scanning head 30 to scan images from the document. That is, if a scanning signal is inputted, the scanning head 30 moves a predetermined distance towards the finish position Y, and then starts to move to the home position X. At this time, the head position sensing part 35 scans light to the stage glass 20, and detects light reflected from the position detection labels 21a and 21b which are positioned to be corresponding to the scanning head 30. Accordingly, the head position sensing part 35 senses the position detection labels 21a and 21b.

The head position sensing part 35 may include a light source module (not shown) and a converter (not shown) which are respectively driven based on a separate control signal with respect to the control signal for the light source module 31 and the converter 33 positioned in the actual reading area 20a. That is, if a scanning signal is inputted, the controlling part 70 may input a control signal only to the head position sensing part 35 (and not to the light source module 31 and the converter 33) when the scanning head moves to the home position X, thereby reducing power consumption.

The head position sensing part 35 includes a distance calculating part (not shown) to compare the position of the sensed position detection labels 21a and 21b, with that of the home position X and to calculate a distance between the scanning head 30 and the home position X. The distance calculating part transmits the calculated distance to the controlling part 70.

If a scanning signal is inputted, the driving part 50 drives the scanning head 30 based on a driving signal of the controlling part 70. The driving part 50 may, for example, include a belt, a pulley, and a driving motor to drive the belt and pulley, or may instead include a pinion disposed in a side of the scanning head 30, a rack disposed in an inner side of a main body to interlock with the pinion, and a driving motor to drive the pinion. Also, alternatively, the driving part 50 may include other known driving configurations. The driving part 50 adjusts a moving speed and a moving direction of the scanning head 30 by controlling a rotation speed and a rotation direction of the driving motor.

The image forming part 60 visualizes the image data generated by the scanning head 30 onto a recording medium, such as paper, transparency sheets, etc. The image forming part 60 may include an electro photography type device which applies a developer to the recording medium by using a potential difference between an organic photo conductor and a developing roller to form an image, an inkjet type device including an ink jet head to shoot jet ink onto the recording medium to form an image, and a thermal transfer type device including a TPH (thermal print head) to apply heat and pressure to an ink ribbon coated with ink which contacts the recording medium to transfer the ink from the ink ribbon to the recording medium. The electro photography type device preferably, but not necessarily, forms an image at a high speed.

The controlling part 70 inputs a control signal to the above parts according to an input signal inputted by a user. The controlling part 70 includes a distance determining part 71 to determine whether the distance between the scanning head 30 and the home position X is greater than a predetermined distance according to the distance signal transmitted by the head position sensing part 35.

If the distance determining part 71 determines that the scanning head 30 is distanced farther away from the home position X than the predetermined distance, the driving part 50 drives the scanning head 30 at a high speed. If the distance determining part 71 determines that the scanning head 30 is distanced within the predetermined distance, the driving part 50 drives the scanning head 30 at a reference speed.

The predetermined distance may be adjusted according to the size, function, and other features of the scanning apparatus 1. Preferably, the predetermined distance has a small value so that the scanning head 30 moves at a high speed from most distances, thereby enabling the scanning apparatus 1 to perform scanning operations more rapidly in most cases.

In the case that the controlling part 70 inputs a control signal to the driving part 50 so that the driving part 50 drives the scanning head 30 at a high speed, the moving speed of the scanning head 30 can be increased by increasing the rotation speed of the driving motor. The rotation speed of the driving motor is preferably, but not necessarily, controlled based on the position of the scanning head 30. For example, if the scanning head 30 is positioned one fourth of the distance from the home position X to the finish position Y and the driving motor has a reference rotation speed, then when the scanning head 30 is positioned two fourths of the distance from the home position X to the finish position Y, the driving motor may double the rotation speed.

It is preferable to control the driving part 50 so that the time required for the scanning head 30 positioned in the finish position Y to reach the home position X and the time required for the scanning head 30 positioned one fourth of the distance from the home position X to the Y to reach the home position X are approximately the same. The speed at which the driving part 50 moves the scanning head 30 back to the home position X can be adjusted relative to the distance between the scanning head 30 and the home position X. This speed may vary proportionally with distance. For example, the driving part 50 can move the scanning head 30 back to the home position X at a constant speed based on a sensed distance. The driving part 50 may drive the scanning head 30 at any of a series of constant speeds corresponding to a series of sensed distances, and these constant speeds may increase as the corresponding sensed distances increase. These speeds may be configured so that the scanning head 30 takes approximately the same amount of time to move back to the home position X from any distance.

Alternatively, the driving part 50 can move the scanning head 30 at a first speed based on a sensed distance and decelerate the scanning head 30 from the first speed to a lower speed or a series of lower speeds as the scanning head 30 moves closer to the home position X. Also, the driving part 50 can move the scanning head 30 at a first speed based on a sensed distance and continuously decelerate the speed of the scanning head 30 on the way back to the home position X.

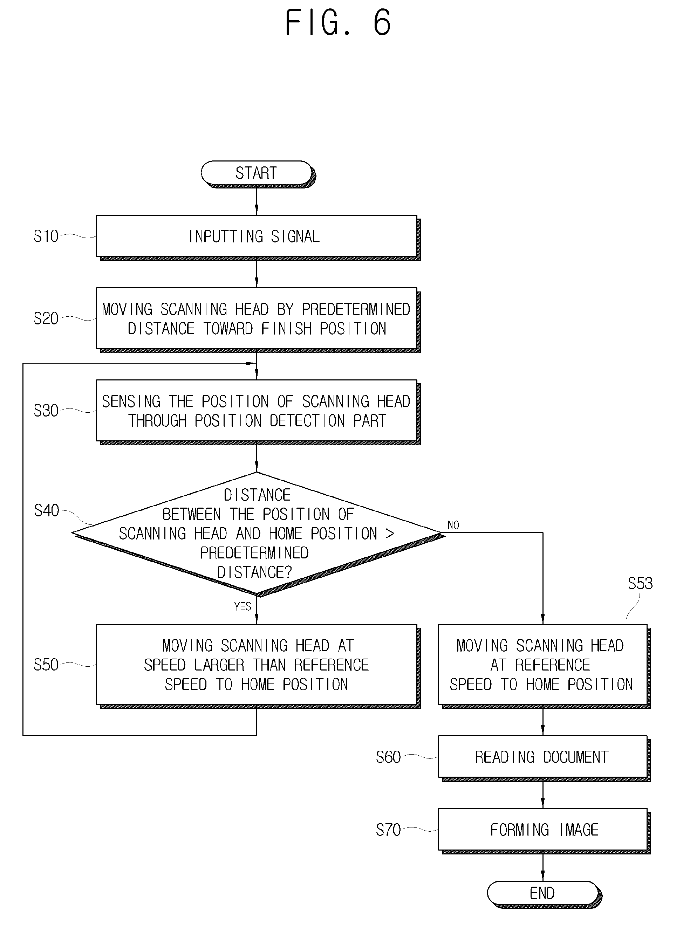

Hereinafter, an operation of the scanning apparatus 1 will be described by referring to FIGs. 3 to 6. First, a document is loaded on the stage glass 20, and a user inputs an input signal through the UI 10 (S10). Then, the scanning head 30 moves a predetermined distance toward the finish position Y (S20). Thus, the scanning head 30 can be prevented from colliding with a side of a main body in moving to the home position X, if the scanning head 30 is positioned in the home position X. It is preferable for the predetermined distance to have the distance m between the white bar 23 and the side of the main body.

For example, the scanning head 30 is positioned in a predetermined position Z of the stage glass 20, and the predetermined distance for which the scanning head 30 moves at the reference speed is 5cm. It is understood that the predetermined distance can be more or less than 5 cm.

The head position sensing part 35 scans light to the position detection label 21a and 21b positioned to be corresponding to the scanning head 30, and senses the position detection labels 21a and 21b by using an image scanning process. Then, the head position sensing part 35 calculates a distance corresponding to the sensed position detection label "18", and transmits the distance to the controlling part 70 (S30).

The distance determining part 71 of the controlling part 70 determines whether the distance transmitted by the head position sensing part 35 indicates that the scanning head 30 is within 5cm of the home position X (S40). If the distance is over 5cm, the controlling part 70 controls the driving part 50 so that the scanning head 30 moves to the home position X at a faster speed than the reference speed (S50). The moving speed of the scanning head 30 increases as the distance between the scanning head 30 and the home position X increases.

If the distance is under the reference distance of 5cm, the controlling part 70 controls the driving part 50 so that the scanning head 30 moves at the reference speed (S53) .

The scanning head 30 reaches the home position X and moves to the finish position Y at the reference speed while scanning an image or images of the document to generate image data (S60). Then, the image forming part 60 visualizes the image data on a recording medium, such as paper, transparency sheets, etc. (S70). For example, referring to FIG. 2, a light scanning unit 51 scans light corresponding to the image data to an organic photo conductor of a developing part 53 to form a latent image, and the developing part 53 applies a developer to the recording medium to visualize an image. Then, a fixing part 55 fixes the developer on the recording medium, and the discharging part 57 discharges the paper.

The scanning apparatus 1 may be an image forming apparatus, a scanner, a facsimile, a copier, a multifunction apparatus, or the like.

The scanning apparatus according to an embodiment of the present invention controls the moving speed of the scanning head according to the position thereof, thereby reducing an initial driving time of the scanning head.
As described above, according to aspects of the present invention, a scanning apparatus, a driving method therefor and an image forming apparatus having the same control a speed with which a scanning head moves to a home position according to the position of the scanning head, thereby enhancing convenience for a user by reducing the time required to perform scanning operations.

In addition, aspects of the present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A scanning apparatus comprising:
a stage glass (20) on which a document is loadableed;
a scanning head (30) which is operable to reciprocates between a home position of the stage glass (20) and a finish position opposite to the home position to scan the document and generate image data;
a position detection part (21) disposed in or on the stage glass (20) along a moving direction of the scanning head (30);
a head position sensing part (35) which is operable to senses the position detection part (21) to sense a position of the scanning head (30) when a scanning signal is inputted; and
a controlling part (70) to control the scanning head (30) so that the scanning head (30) moves to the home position at a faster speed than a predetermined reference speed if the scanning head (30) is distanced farther from the home position than a predetermined distance.

2. The scanning apparatus according to claim 1, wherein the position detection part (21) comprises a position detection label (21a/b) including at least one of a letter and a number.

3. The scanning apparatus according to claim 2, wherein the stage glass (20) comprises:
an actual reading area (20a) on which the document is loadableed and through which an image of the document is scannableed; and
a valid reading area (20b), located at a perimeter of the actual reading area (20a), which corresponds to opposite sides of the scanning head (30).

4. The scanning apparatus of claim 3, wherein the position detection part (21) is located in the valid reading area (20b).

5. The scanning apparatus according to claim 2 or 3, wherein the position detection label (21a/b) comprises a plurality of labels located in the valid reading area (20b) and spaced at uniform intervals from each other.

6. The scanning apparatus according to any one of claims 2 to 5, wherein the head position sensing part (35) is operable to moves a predetermined distance toward the finish position when the scanning signal is inputted, and to senses the position of the scanning head (30) by sensing the position detection label (21a/b) positioned to correspond to the moved scanning head (30).

7. The scanning apparatus according to claim 3, wherein the head position sensing part (35) is located at the opposite sides of the scanning head (30).

8. The scanning apparatus according to claim 7, wherein the head position sensing part (35) comprises a distance calculating part to compare a sensed position of the position detection label (21a/b) with the home position to calculate a distance therebetween.

9. The scanning apparatus according to any preceding claim 1, further comprising a driving part (50) to move the scanning head (30) between the home position and the finish position, wherein the controlling part (70) is operable to controls the driving part (50) to control a moving speed of the scanning head (30).

10. The scanning apparatus according to claim 9, wherein the controlling part (70) comprises a distance determining part to determine whether the scanning head (30) is distanced farther from the home position than the predetermined distance, and to controls the moving speed of the scanning head (30) to be proportional to a distance between the scanning head (30) and the home position.

11. The scanning apparatus according to claim 9 or 10, wherein:
the driving part (50) comprises a motor; and
the controlling part (70) is operable to control a driving speed of the motor to control the moving speed of the scanning head (30).

12. The scanning apparatus of any preceding claim 1, wherein the head position sensing part (35) is operable to senses the position detection part (21) by using an image scanning process.

13. A driving method for a scanning apparatus comprising:
moving a scanning head (30), which reciprocates between a home position and a finish position opposite to the home position to scan a document and generate image data, toward the finish position by a predetermined distance when a scanning signal is inputted;
sensing a position of the scanning head (30) by sensing a position detection part (21) located in or on a stage glass (20) on which the document is loaded; and
moving the scanning head (30) to the home position at a faster speed than a predetermined reference speed if the scanning head (30) is distanced farther from the home position than a predetermined distance.

14. The driving method for a scanning apparatus according to claim 11, comprising moving the scanning head (30) to the home position at the predetermined reference speed if the scanning head (30) is distanced within the predetermined distance from the home position.

15. The driving method of claim 13, wherein the sensing of the position detection part (21) comprises using an image scanning process.

16. An image forming apparatus comprising:
a stage glass (20) on which a document is loadableed;
a scanning head (30) which is operable to reciprocates between a home position of the stage glass (20) and a finish position opposite to the home position to scan the document and generate image data;
a position detection part (21) disposed in or on the stage glass (20) along a moving direction of the scanning head (30);
a head position sensing part (35) which is operable senses the position detection part (21) to sense a position of the scanning head (30) when a scanning signal is inputted; and
a controlling part (70) to control the scanning head (30) so that the scanning head (30) moves to the home position at a faster speed than a predetermined reference speed if the scanning head (30) is distanced farther from the home position than a predetermined distance.

17. The image forming apparatus of claim 16, wherein the head position sensing part (35) is operable to senses the position detection part (21) using an image scanning process.

18. An image forming apparatus comprising:
a stage glass (20) on which a document is loadableed; and
a scanning head (30) which is operable to moves between a home position of the stage glass (20) and a finish position opposite to the home position to scan the document and generate image data, wherein the scanning head (30) is operable to moves to the home position according to a position of the scanning head (30) relative to the home position.

19. The image forming apparatus of claim 18, wherein a moving speed is operable to be adjusted to move the scanning head (30) back to the home position at a faster speed than a reference speed as a distance between the scanning head (30) and the home position increases.

20. The image forming apparatus of claim 18, wherein a moving speed is adjustableed to move the scanning head (30) back to the home position at a faster speed than a reference speed if the scanning head (30) is located farther from the home position than a predetermined distance.

21. The image forming apparatus of claim 18, wherein a moving speed is adjustableed to move the scanning head (30) back to the home position at one of a series of gradually increasing speeds which are faster than a reference speed if the scanning head (30) is located farther from the home position than one of a series of gradually larger predetermined distances corresponding to the series of gradually increasing speeds.

22. The image forming apparatus of claim 18, wherein a moving speed is adjustableed to move the scanning head (30) back to the home position at a first speed and then decelerate the first speed as the scanning head (30) approaches the home position.

23. The image forming apparatus of claim 18, further comprising:
an actual reading area (20a) on which the document is loadedable and through which an image of the document is readable; and
a valid reading area (20b) located at a perimeter of the actual reading area (20a).

24. The image forming apparatus of claim 23, further comprising:
a position detection part (21) located on the valid reading area (20b), comprising :
a position detection label (21a/b) including at least one of a letter and a number.

25. The image forming apparatus of claim 24, wherein the position detection label (21a/b) comprises a plurality of letters and/or numbers arranged spaced at uniform intervals from each other.

26. The image forming apparatus of claim 24, wherein the scanning head (30) further comprises:
a head position sensing part (35) which is operable to senses the position detection label (21a/b) to sense the distance between the scanning head (30) and the home position; and
a controlling part (70) to control the moving speed based on the sensed distance.

27. The image forming apparatus of claim 26, wherein the head position sensing part (35) is operable to senses the position detection label (21a/b) using an image scanning process.

28. A driving method for an image forming apparatus comprising:
moving a scanning head (30), which reciprocates between a home position and a finish position opposite to the home position to scan a document and generate image data, toward the finish position by a predetermined distance when a scanning signal is inputted;
sensing a position of the scanning head (30) by sensing a position detection part (21) located in or on a stage glass (20) on which a document is loaded; and
moving the scanning head (30) back to the home position at a speed according to the sensed position of the scanning head (30) relative to the home position.

29. The driving method of claim 28, wherein the moving of the scanning head (30) back to the home position comprises moving the scanning head (30) at a faster speed than a predetermined reference speed as a distance between the scanning head (30) and the home position increases.

30. The driving method of claim 28, wherein the moving of the scanning head (30) back to the home position comprises moving the scanning head (30) at a faster speed than a predetermined reference speed if the scanning head (30) is located farther from the home position than a predetermined distance.

31. The image forming apparatus of claim 28, wherein the moving of the scanning head (30) back to the home position comprises moving the scanning head (30) at one of a series of gradually increasing speeds which are faster than a reference speed if the scanning head (30) is located farther from the home position than one of a series of gradually larger predetermined distances corresponding to the series of gradually increasing speeds.

32. The image forming apparatus of claim 28, wherein the moving of the scanning head (30) back to the home position comprises moving the scanning head (30) at a first speed and then decelerating the first speed as the scanning head (30) approaches the home position.
